# EUROPÄISCHE PATENTSCHRIFT

(11) **EP 3 362 837 B1**
(45) Veröffentlichungstag und Bekanntmachung des Hinweises auf die Patenterteilung: **15.04.2020**
(21) Anmeldenummer: 16775082.7
(22) Anmeldetag: 12.09.2016
(51) Int. Cl.: H02J 50/10, G02B 25/02, H02J 7/02

(54) **SEHHILFE-VORRICHTUNG MIT INDUKTIVEM AUFLADEN DER BATTERIE**
SEEING AID DEVICE HAVING INDUCTIVE BATTERY CHARGING
DISPOSITIF D'AIDE VISUELLE À CHARGE INDUCTIVE DE LA BATTERIE

(30) Priorität: 13.10.2015 DE 102015117403
(43) Veröffentlichungstag der Anmeldung: 22.08.2018
(73) Patentinhaber: A. Schweizer GmbH Optische Fabrik, 91301 Forchheim (DE)
(72) Erfinder: SCHÜTTINGER, Alfred, 91336 Heroldsbach (DE)
(74) Vertreter: Hafner & Kohl Patent- und Rechtsanwälte Partnerschaft mbB
(86) Internationale Anmeldenummer: PCT/EP2016/071448
(87) Internationale Veröffentlichungsnummer: WO 2017/063802

(56) Entgegenhaltungen:
- WO-A1-2011/138089
- WO-A2-2014/076048
- CN-Y- 200 965 588

## Beschreibung

Die Erfindung betrifft eine optisch oder elektronisch vergrößernde Sehhilfe-Vorrichtung.

Entsprechende Sehhilfe-Vorrichtungen sind z. B. in Form von optischen oder elektronischen Lupen an und für sich bekannt. Entsprechende Sehhilfe-Vorrichtungen können elektrische oder elektronische Funktionskomponenten umfassen, um deren Funktionalität, etwa durch integrierte Leuchtmittel, zu erweitern.

Die elektrische Versorgung entsprechender elektrischer oder elektronischer Funktionskomponenten erfolgt über einen wiederaufladbaren elektrischen Energiespeicher, z. B. in Form eines Akkumulators, welcher bisweilen geladen, d. h. mit elektrischer Energie versorgt, werden muss. Hierfür ist die Sehhilfe-Vorrichtung über ein Versorgungskabel mit einer externen elektrischen Energiequelle zu verbinden, was, insbesondere für in ihrem Sehvermögen eingeschränkte Benutzer, mitunter umständlich sein kann.

CN 200 965 588 Y offenbart eine Handlupe mit einer Beleuchtungseinrichtung, deren Versorgung mit elektrischer Energie über eine Batterie erfolgt, welche über einen Handgenerator zu laden ist.

Hiervon ausgehend besteht ein Weiterentwicklungsbedarf entsprechender Sehhilfe-Vorrichtungen im Hinblick auf den Bedienkomfort bei einem Laden des wiederaufladbaren elektrischen Energiespeichers.

Der Erfindung liegt die Aufgabe zugrunde, eine demgegenüber verbesserte Sehhilfe-Vorrichtung anzugeben.

Die Aufgabe wird durch eine Sehhilfe-Vorrichtung gemäß Anspruch 1 gelöst. Die hierzu abhängigen Ansprüche betreffen besondere Ausführungsformen der Sehhilfe-Vorrichtung.

Die hierin beschriebene Sehhilfe-Vorrichtung dient insbesondere als optisch oder elektronisch vergrößernde Sehhilfe. Die vermittels der Sehhilfe-Vorrichtung realisierbare Vergrößerung zu betrachtender Objekte, d. h. insbesondere Gegenstände, bild- und/oder textbasierter Informationsinhalte, etc., kann sonach (rein) optisch oder (rein) elektronisch erfolgen. Entsprechend kann die Sehhilfe-Vorrichtung z. B. als eine mobile oder stationäre optische oder elektronische Lupe, insbesondere optische oder elektronische Handlupe, optische oder elektronische Standlupe oder optische oder elektronische Umhängelupe, oder als ein optisches oder elektronisches Leseglas, etc. ausgebildet sein.

Die Sehhilfe-Vorrichtung kann also, z. B. in Form einer optischen Lupe, rein optisch vergrößernd ausgebildet sein, wobei sie wenigstens ein optisches Element, typischerweise ein Linsen- oder Lupenglas, umfasst, oder, z. B. in Form einer elektronischen Lupe, rein elektronisch vergrößernd ausgebildet sein, wobei sie neben einer soft- und/oder hardwaremäßig implementierten elektronischen Vergrößerungseinrichtung wenigstens ein Anzeige- bzw. Displayelement zur Darstellung elektronisch vergrößerter Objekte umfasst.

Die Sehhilfe-Vorrichtung umfasst wenigstens eine in wenigstens einem Betriebszustand elektrische Energie verbrauchende elektrische oder elektronische Funktionskomponente (elektrischer Verbraucher). Die Funktionskomponente verbraucht elektrische Energie (elektrischen Strom), um in Betrieb genommen bzw. in Betrieb gehalten zu werden. Unterschiedliche Betriebszustände der Funktionskomponente können sich in der jeweils verbrauchten elektrischen Energie unterscheiden.

Bei einer optisch vergrößernden Sehhilfe-Vorrichtung, d. h. z. B. bei einer optischen Lupe, kann es sich bei einer entsprechenden Funktionskomponente z. B. um ein Leuchtmittel, z. B. in Form einer Leuchtdiode (LED), handeln, welches in wenigstens einem Betriebszustand Licht bestimmter optischer Eigenschaften, d. h. insbesondere einer bestimmten Intensität und einer bestimmten Wellenlänge, emittiert. Ein entsprechendes Leuchtmittel verbessert die Sehhilfe-Vorrichtung insofern, als das über diese zu vergrößernde Objekt, insbesondere bei widrigen Lichtverhältnissen, vermittels des Leuchtmittels beleuchtet und insofern besser wahrgenommen werden kann.

Bei einer elektronisch vergrößernden Sehhilfe-Vorrichtung, d. h. z. B. bei einer elektronischen Lupe, kann es sich bei einer entsprechenden Funktionskomponente z. B. um ein Anzeige- bzw. Displayelement zur Darstellung elektronisch vergrößerter Objekte handeln.

Unabhängig von der konkreten Ausführungsform der wenigstens einen Funktionskomponente ist dieser wenigstens ein wiederaufladbarer elektrischer Energiespeicher zugeordnet. Die Funktionskomponente ist über den im Weiteren abgekürzt als "Energiespeicher" bezeichneten, wiederaufladbaren elektrischen Energiespeicher mit elektrischer Energie versorgbar bzw. versorgt. Bei dem Energiespeicher handelt es sich typischerweise um einen Akkumulator, kurz Akku, bzw. eine Batterie bzw. umfasst der Energiespeicher wenigstens einen solchen.

Wesentlich an der hierin beschriebenen Sehhilfe-Vorrichtung ist, dass Ladevorgänge des Energiespeichers drahtlos erfolgen können. Die Sehhilfe-Vorrichtung ist sonach im Rahmen entsprechender Ladevorgänge des Energiespeichers nicht mit einem Versorgungskabel zu verbinden, was ihre Handhabbarkeit erheblich verbessert. Wie eingangs erwähnt, kann die Verbindung einer Sehhilfe-Vorrichtung mit einem entsprechenden Versorgungskabel insbesondere für in ihrem Sehvermögen eingeschränkte Benutzer mitunter umständlich sein.

Drahtlose Ladevorgänge des Energiespeichers sind deshalb möglich, als der Energiespeicher induktiv geladen, d. h. induktiv mit elektrischer Energie versorgt, werden kann. Hierfür umfasst die Sehhilfe-Vorrichtung wenigstens ein dem Energiespeicher zugeordnetes induktives Element, typischerweise in Form einer induktiven Spule (Empfänger- oder Sekundärspule). Das induktive Element ist dazu eingerichtet, den Energiespeicher über induktive Wechselwirkung mit wenigstens einem weiteren induktiven Element, typischerweise in Form einer weiteren induktiven Spule (Sender- oder Primärspule), mit elektrischer Energie zu versorgen. Das weitere induktive Element ist nicht Bestandteil der Sehhilfe-Vorrichtung, sondern, wie im Weiteren erläutert, Bestandteil einer gesonderten Ladevorrichtung zum Laden des Energiespeichers der Sehhilfe-Vorrichtung. Ein vorrichtungsseitiges induktives Element kann als "erstes induktives Element", ein ladevorrichtungsseitiges weiteres induktives Element kann als "zweites induktives Element" bezeichnet werden.

Unter induktiver Wechselwirkung ist eine drahtlose induktive Energieübertragung zu verstehen. Hierbei wird in dem als Sender- oder Primärspule dienenden weiteren induktiven Element ein magnetisches Feld, insbesondere ein magnetisches Wechselfeld, erzeugt, wodurch in dem als Empfangs- oder Sekundärspule dienenden (vorrichtungsseitigen) induktiven Element eine elektrische Spannung, insbesondere eine elektrische Wechselspannung, induziert wird.

Zwischen dem induktiven Element und dem diesem zugeordneten Energiespeicher besteht eine elektrisch leitfähige Verbindung, sodass in dem (vorrichtungsseitigen) induktiven Element bei induktiver Wechselwirkung mit einem weiteren induktiven Element im Rahmen eines Ladevorgangs des Energiespeichers erzeugte elektrische Energie dem Energiespeicher zugeführt werden kann.

Induktive Ladevorgänge des Energiespeichers werden typischerweise über eine Steuereinrichtung gesteuert. Die Sehhilfe-Vorrichtung kann sonach eine, gegebenenfalls zwischen das wenigstens eine (vorrichtungsseitige) induktive Element und den wenigstens einen Energiespeicher geschaltete, Steuereinrichtung, welche zur Steuerung des Ladezustands und/oder des Ladebetriebs des Energiespeichers und zur Ermittlung wenigstens einer den Ladezustand und/oder den Ladebetrieb des Energiespeichers beschreibenden Ladezustands- und/oder Ladebetriebsinformation eingerichtet ist, umfassen. Eine entsprechende Steuereinrichtung kann software- und/oder hardwaremäßig implementiert sein.

Weiterhin kann die Sehhilfe-Vorrichtung eine der Steuereinrichtung zugeordnete Ausgabeeinrichtung, welche zur Ausgabe wenigstens einer von der Steuereinrichtung ermittelten Ladezustands- bzw. Ladebetriebsinformation an einen Benutzer und/oder an ein benutzerseitiges (mobiles) Endgerät, d. h. z. B. ein Handy, Smartphone, Laptop, Tablet, eine Smartwatch, etc., eingerichtet ist, umfassen. Eine entsprechende Ausgabeeinrichtung ist bei direkter Ausgabe entsprechender Ladezustands- und/oder Ladebetriebsinformationen an einen Benutzer insbesondere dazu eingerichtet, entsprechende Ladezustands- und/oder Ladebetriebsinformationen akustisch und/oder optisch und/oder haptisch auszugeben. Bestimmte Lade- bzw. Ladebetriebszustände können sonach durch bestimmte zuordenbare bzw. zugeordnete akustische und/oder optische und/oder haptische Signale ausgegeben werden. Hierfür kann die Ausgabeeinrichtung als eine Lautsprechereinrichtung zur Ausgabe akustischer Signale bestimmter Intensität (Lautstärke), Frequenz und Rhythmik und/oder eine im einfachsten Falle als Leuchtdiode ausgebildete Anzeigeeinrichtung zur Ausgabe optischer Signale bestimmter graphischer Darstellung, Frequenz und Rhythmik und/oder eine Vibrationseinrichtung zur Ausgabe haptischer Signale bestimmter Intensität, Frequenz und Rhythmik ausgebildet sein bzw. wenigstens eine solche umfassen. Bei Ausgabe entsprechender Ladezustands- und/oder Ladebetriebsinformationen an ein benutzerseitiges (mobiles) Endgerät ist die Ausgabeeinrichtung dazu eingerichtet, entsprechende Ladezustands- und/oder Ladebetriebsinformationen direkt oder indirekt, d. h. z. B. über ein Kommunikationsnetzwerk, an ein benutzerseitiges (mobiles) Endgerät zu senden.

Die geometrisch-konstruktive Anordnung bzw. Ausbildung des Energiespeichers bzw. des diesem zugeordneten induktiven Elements ist grundsätzlich in Abhängigkeit der jeweils konkreten geometrisch-konstruktiven Ausgestaltung der Sehhilfe-Vorrichtung zu wählen.

Eine erfindungsgemäße geometrisch-konstruktive Ausgestaltung der Sehhilfe-Vorrichtung sieht einen länglichen Grundkörper mit wenigstens einem Lagerungsabschnitt zur Lagerung wenigstens eines optischen Elements, insbesondere eines Linsen- oder Lupenglases, oder eines elektronischen Elements, insbesondere eines Anzeige- oder Displayelements zur Anzeige elektronisch vergrößerter Objekte, und wenigstens einem Handhabungsabschnitt zur Handhabung des Grundkörpers, vor.

Der Grundkörper kann ein- oder mehrteilig ausgebildet sein. Ein mehrteilig ausgebildeter Grundkörper umfasst mehrere miteinander verbindbare bzw. im Montagezustand der Sehhilfe-Vorrichtung miteinander verbundene Grundkörperelemente. Die Verbindung der Grundkörperelemente kann lösbar sein, sodass durch Lösen der Verbindung wenigstens zweiter Grundkörperelemente eine Zugriffsmöglichkeit in einen grundkörperseitig begrenzten Innenraum, in welchem verschiedene Bestandteile der Sehhilfe-Vorrichtung, wie z. B. der Energiespeicher, angeordnet oder ausgebildet sind, geschaffen werden kann. Der Lagerungsabschnitt und der Handhabungsabschnitt können als entsprechende Grundkörperelemente vorliegen; gleichermaßen kann jedoch auch der Lagerungsabschnitt bzw. der Handhabungsabschnitt mehrteilig ausgebildet sein, sodass ein Grundkörpersegment auch ein Lagerungsabschnittsegment bzw. ein Handhabungsabschnittsegment sein kann.

Unabhängig von der ein- oder mehrteiligen Ausbildung des Grundkörpers ist das induktive Element im Bereich des Handhabungsabschnitts an oder in dem Grundkörper angeordnet oder ausgebildet. Gleiches kann für den Energiespeicher und/oder die Steuereinrichtung und/oder die Ausgabeeinrichtung gelten.

Zweckmäßig ist das induktive Element unterhalb einer Längs(mittel)achse des Handhabungsabschnitts, insbesondere im Bereich der Innenseite einer Außenwandung des Handhabungsabschnitts, innerhalb des Grundkörpers angeordnet. Die Zweckmäßigkeit dieser Anordnung des induktiven Elements besteht darin, dass das induktive Element einerseits gegenüber äußeren, d. h. z. B. mechanischen und/oder klimatischen, Einflüssen gut geschützt angeordnet ist und andererseits im Rahmen eines Ladevorgangs des Energiespeichers möglichst nahe an ein weiteres induktives Element gebracht werden kann, was einen hohen Wirkungsgrad der induktiven Wechselwirkung und somit des Ladevorgangs gewährleistet.

Der Handhabungsabschnitt kann zumindest abschnittsweise eine ergonomische, d. h. z. B. bauchige, geometrische Gestalt aufweisen, was die Handhabbarkeit der Sehhilfe-Vorrichtung weiter verbessert. Der Querschnitt des Handhabungsabschnitts kann sonach zumindest abschnittsweise rund oder rundlich, d. h. ellipsoid bzw. oval, sein.

Wie erwähnt, kann es sich bei einer Funktionskomponente um ein Leuchtmittel, z. B. eine Leuchtdiode (LED), welches in wenigstens einem Betriebszustand Licht bestimmter optischer Eigenschaften, d. h. insbesondere einer bestimmten Intensität und einer bestimmten Wellenlänge, emittiert, handeln. Ein solches Leuchtmittel ist zweckmäßig im Bereich des Lagerungsabschnitts angeordnet, sodass von dem Leuchtmittel emittiertes Licht zumindest auf das durch das optische Element betrachtbare bzw. betrachtete Objekt trifft. Bei einer optischen Sehhilfe-Vorrichtung kann zwischen dem Leuchtmittel und dem Lagerungsabschnitt bzw. dem durch diesen gelagerten optischen Element, wie erwähnt z. B. ein Linsen- oder Lupenglas, ein Blendenabschnitt angeordnet oder ausgebildet sein, welcher dazu eingerichtet ist, zu verhindern, dass von dem Leuchtmittel emittiertes Licht unmittelbar auf das optische Element trifft.

Die Erfindung betrifft ferner eine Ladevorrichtung zum Laden eines Energiespeichers einer wie beschriebenen Sehhilfe-Vorrichtung. Die Ladevorrichtung umfasst wenigstens ein induktives Element, d. h. eine induktive Spule (Sender- oder Primärspule), welches dazu eingerichtet ist, mit einem einem zu ladenden Energiespeicher der Sehhilfe-Vorrichtung zugeordneten induktiven Element (Empfänger- oder Sekundärspule) induktiv zu wechselwirken, um den Energiespeicher über induktive Wechselwirkung drahtlos mit elektrischer Energie zu versorgen bzw. zu laden. Selbstverständlich können über eine entsprechende Ladevorrichtung prinzipiell auch Energiespeicher mehrerer Vorrichtungen induktiv geladen bzw. mit elektrischer Energie versorgt werden. Sämtliche Ausführungen im Zusammenhang mit der Sehhilfe-Vorrichtung gelten analog für die Ladevorrichtung und umgekehrt.

Die Ladevorrichtung kann einen Gehäusekörper, welcher wenigstens einen, insbesondere ebenen, Auflageabschnitt zur Auflage des Gehäusekörpers auf einem, insbesondere ebenen, Untergrund, d. h. z. B. auf einer Möbelplatte, insbesondere einer Tischplatte, aufweisen, welcher eine sichere Aufstellung der Ladevorrichtung auf einem Untergrund ermöglicht, und/oder wenigstens einen Aufnahmeabschnitt zur zumindest abschnittsweisen Aufnahme der Sehhilfe-Vorrichtung zumindest während eines Ladevorgangs des jener zugehörigen Energiespeichers aufweisen, welcher eine sichere und kompakte Lagerung der Sehhilfe-Vorrichtung an oder in dem Gehäusekörper ermöglicht.

Der Aufnahmeabschnitt kann entsprechend wenigstens eine der Außenkontur eines Grundkörpers, insbesondere eines Handhabungsabschnitts des Grundkörpers, der Sehhilfe-Vorrichtung gegengleich geformte Aufnahmekontur aufweisen. Die Aufnahmekontur kann z. B. durch eine, insbesondere muldenartige, Vertiefung an oder in dem Gehäusekörper ausgebildet sein, in welcher der vorrichtungsseitige Grundkörper aufnehmbar ist.

Die Ladevorrichtung kann eine Steuereinrichtung, welche zur Steuerung des Ladebetriebs des Energiespeichers und zur Ermittlung einer den Ladebetrieb des Energiespeichers beschreibenden Ladebetriebsinformation eingerichtet ist, umfassen.

Analog der vorrichtungsseitigen Steuereinrichtung kann auch der ladevorrichtungsseitigen Steuereinrichtung eine Ausgabeeinrichtung zugeordnet sein, welche zur Ausgabe wenigstens einer von der Steuereinrichtung ermittelten Ladebetriebsinformation an einen Benutzer und/oder an ein benutzerseitiges (mobiles) Endgerät eingerichtet ist. Es gelten die Ausführungen im Zusammenhang mit der vorrichtungsseitigen Ausgabeeinrichtung analog.

Die Erfindung betrifft weiter eine Ladeanordnung zum Laden eines Energiespeichers einer wie beschriebenen Sehhilfe-Vorrichtung vermittels einer wie beschriebenen Ladevorrichtung. Sämtliche Ausführungen im Zusammenhang mit der Sehhilfe-Vorrichtung und der Ladevorrichtung gelten analog für die Anordnung.

Schließlich betrifft die Erfindung ein Verfahren zum Laden eines Energiespeichers einer wie beschriebenen Sehhilfe-Vorrichtung, insbesondere vermittels einer wie beschriebenen Ladevorrichtung. Verfahrensgemäß wird der zu ladende Energiespeicher im Rahmen eines Ladevorgangs über induktive Wechselwirkung des wenigstens einen vorrichtungsseitigen induktiven Elements mit wenigstens einem ladevorrichtungsseitigen weiteren induktiven Element mit elektrischer Energie versorgt und somit geladen. Sämtliche Ausführungen im Zusammenhang mit der Sehhilfe-Vorrichtung, der Ladevorrichtung und der Anordnung gelten analog für das Verfahren.

Die Erfindung ist anhand von Ausführungsbeispielen in den folgenden Fig. näher erläutert. Dabei zeigt:
- Fig. 1: eine Prinzipdarstellung einer Sehhilfe-Vorrichtung gemäß einem Ausführungsbeispiel;
- Fig. 2, 3: jeweils eine Prinzipdarstellung einer Ladevorrichtung gemäß einem Ausführungsbeispiel;
- Fig. 4: eine Prinzipdarstellung einer Ladeanordnung gemäß einem Ausführungsbeispiel;
- Fig. 5: eine perspektivische Darstellung einer Sehhilfe-Vorrichtung gemäß einem weiteren Ausführungsbeispiel; und
- Fig. 6: einen Längsschnitt durch die in Fig. 5 gezeigte Sehhilfe-Vorrichtung.

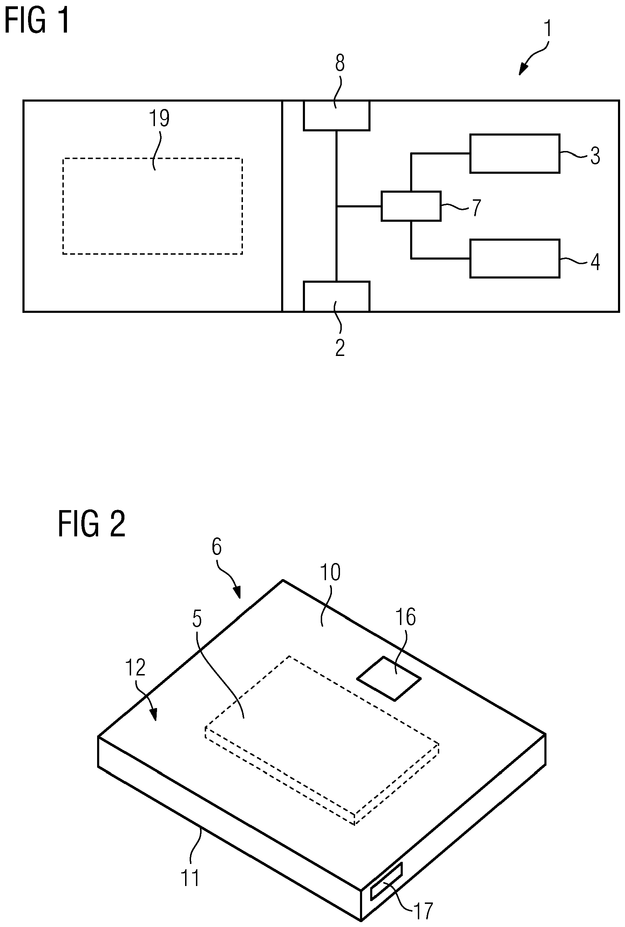

Fig. 1 zeigt eine Prinzipdarstellung einer Sehhilfe-Vorrichtung 1 gemäß einem Ausführungsbeispiel. Fig. 1 zeigt in Form einer optischen Lupe ein Ausführungsbeispiel einer entsprechenden Sehhilfe-Vorrichtung 1, welches als optisch vergrößernde Sehhilfe dient.

Grundsätzlich könnte ein Ausführungsbeispiel der Sehhilfe-Vorrichtung 1, z. B. in Form einer elektronischen Lupe, auch eine elektronisch vergrößernde Sehhilfe-Vorrichtung 1 sein, welche als elektronisch vergrößernde Sehhilfe dient. Die vermittels der Sehhilfe-Vorrichtung 1 realisierbare Vergrößerung zu betrachtender Objekte, d. h. insbesondere Gegenstände, bild- und/oder textbasierter Informationsinhalte, etc., kann sonach grundsätzlich (rein) optisch oder (rein) elektronisch erfolgen.

Die Sehhilfe-Vorrichtung 1 umfasst eine oder mehrere in wenigstens einem Betriebszustand elektrische Energie verbrauchende elektrische oder elektronische Funktionskomponente(n) 2 (elektrische Verbraucher). Eine entsprechende Funktionskomponente 2 verbraucht elektrische Energie (elektrischen Strom), um in Betrieb genommen bzw. in Betrieb gehalten zu werden. Unterschiedliche Betriebszustände der Funktionskomponente 2 können sich in der jeweils verbrauchten elektrischen Energie unterscheiden.

Bei dem in Fig. 1 gezeigten Ausführungsbeispiel handelt es sich bei der Funktionskomponente 2 um ein Leuchtmittel, z. B. in Form einer Leuchtdiode (LED), zur Emission von Licht, d. h. ein Leuchtmittel, welches in wenigstens einem Betriebszustand Licht bestimmter optischer Eigenschaften, d. h. insbesondere einer bestimmten Intensität und einer bestimmten Wellenlänge, emittiert. Bei einer elektronisch vergrößernden Sehhilfe-Vorrichtung 1 könnte es sich bei einer entsprechenden Funktionskomponente 2 z. B. um ein Anzeige- bzw. Displayelement zur Darstellung elektronisch vergrößerter Objekte handeln.

Unabhängig von der konkreten Ausführungsform der Funktionskomponente 2 ist dieser ein wiederaufladbarer elektrischer Energiespeicher 3 zugeordnet. Die Funktionskomponente 2 ist über den Energiespeicher 3 mit elektrischer Energie versorgbar bzw. versorgt. Bei dem Energiespeicher 3 handelt es sich um einen Akkumulator, kurz Akku, bzw. umfasst der Energiespeicher 3 wenigstens einen solchen.

Die Sehhilfe-Vorrichtung 1 ist derart konfiguriert, dass Ladevorgänge des Energiespeichers 3 drahtlos erfolgen können. Die Sehhilfe-Vorrichtung 1 ist sonach im Rahmen entsprechender Ladevorgänge des Energiespeichers 3 nicht mit einem Versorgungskabel zu verbinden, was ihre Handhabbarkeit erheblich verbessert.

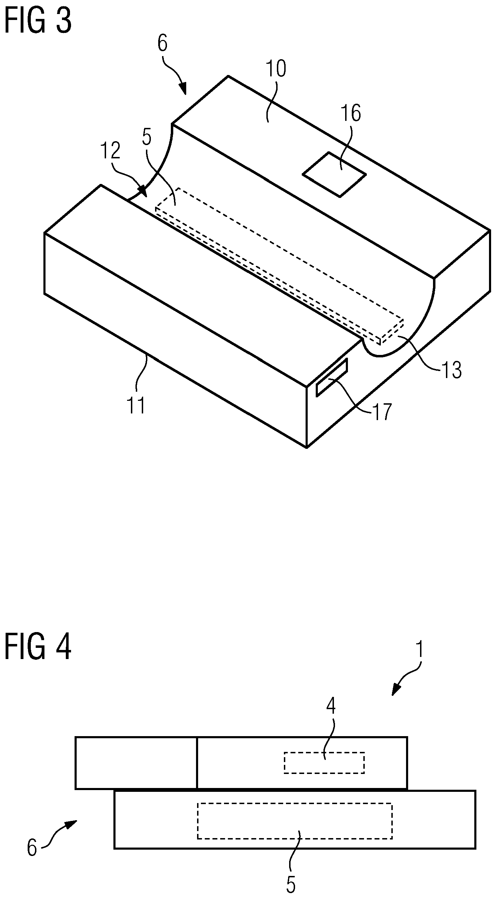

Drahtlose Ladevorgänge des Energiespeichers 3 sind deshalb möglich, als der Energiespeicher 3 induktiv geladen, d. h. induktiv mit elektrischer Energie versorgt, werden kann. Hierfür umfasst die Sehhilfe-Vorrichtung 1 ein dem Energiespeicher 3 zugeordnetes induktives Element 4 in Form einer induktiven Spule (Empfänger- oder Sekundärspule). Das induktive Element 4 ist dazu eingerichtet, den Energiespeicher 3 über induktive Wechselwirkung mit einem weiteren induktiven Element 5 in Form einer weiteren induktiven Spule (Sender- oder Primärspule) mit elektrischer Energie zu versorgen. Das weitere induktive Element 5 ist nicht Bestandteil der Sehhilfe-Vorrichtung 1, sondern Bestandteil einer in den Fig. 2, 3 jeweils in einer Prinzipdarstellung gezeigten, gesonderten Ladevorrichtung 6 zum Laden des Energiespeichers 3 der Sehhilfe-Vorrichtung 1. Zwischen dem induktiven Element 4 und dem Energiespeicher 3 besteht eine elektrisch leitfähige Verbindung, sodass in dem (vorrichtungsseitigen) induktiven Element 4 bei induktiver Wechselwirkung mit einem weiteren induktiven Element 5 im Rahmen eines Ladevorgangs des Energiespeichers 3 erzeugte elektrische Energie dem Energiespeicher 3 zugeführt werden kann.

Unter induktiver Wechselwirkung ist eine drahtlose induktive Energieübertragung zu verstehen. Hierbei wird in dem als Sender- oder Primärspule dienenden weiteren induktiven Element 5 ein magnetisches Feld, insbesondere ein magnetisches Wechselfeld, erzeugt, wodurch in dem als Empfangs- oder Sekundärspule dienenden vorrichtungsseitigen induktiven Element 4 eine elektrische Spannung, insbesondere eine elektrische Wechselspannung, induziert wird.

Induktive Ladevorgänge des Energiespeichers 3 werden über eine vorrichtungsseitige Steuereinrichtung 7 gesteuert. Die zwischen das induktive Element 4 und den Energiespeicher 3 geschaltete Steuereinrichtung 7 ist zur Steuerung des Ladezustands und/oder des Ladebetriebs des Energiespeichers 3 und zur Ermittlung wenigstens einer den Ladezustand und/oder den Ladebetrieb des Energiespeichers 3 beschreibenden Ladezustands- und/oder Ladebetriebsinformation eingerichtet. Die Steuereinrichtung 7 kann software- und/oder hardwaremäßig implementiert sein.

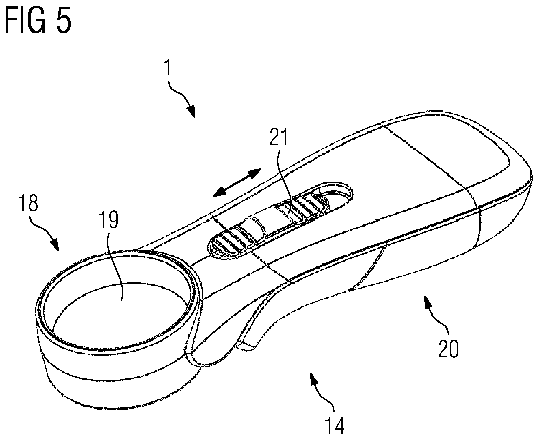

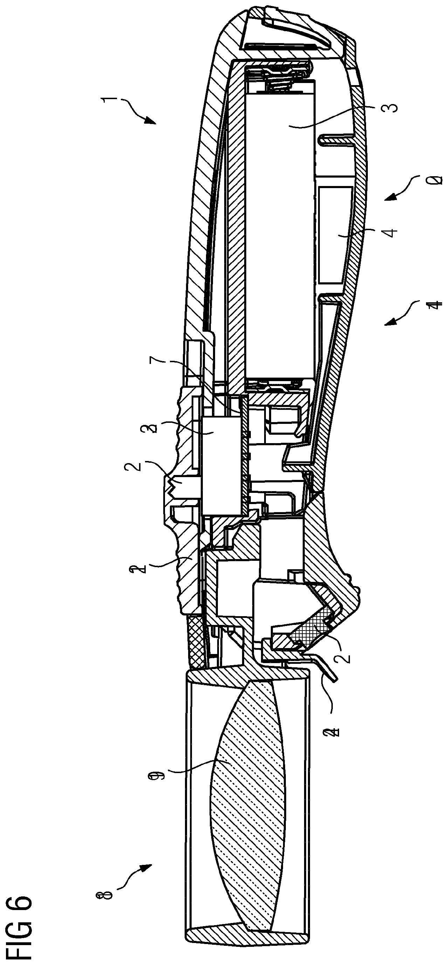

Der Steuereinrichtung 7 kann eine Ausgabeeinrichtung 8 zugeordnet sein, welche zur Ausgabe einer von der Steuereinrichtung 7 ermittelten Ladezustands- bzw. Ladebetriebsinformation an einen Benutzer und/oder an ein benutzerseitiges (mobiles) Endgerät, d. h. z. B. ein Handy, Smartphone, Laptop, Tablet, eine Smartwatch, etc., eingerichtet ist. Bei direkter Ausgabe entsprechender Ladezustands- und/oder Ladebetriebsinformationen an einen Benutzer ist die Ausgabeeinrichtung 8 insbesondere dazu eingerichtet, entsprechende Ladezustands- und/oder Ladebetriebsinformationen akustisch und/oder optisch und/oder haptisch auszugeben. Bestimmte Lade- bzw. Ladebetriebszustände können sonach durch bestimmte zuordenbare bzw. zugeordnete akustische und/oder optische und/oder haptische Signale ausgegeben werden. Hierfür kann die Ausgabeeinrichtung 8 als eine Lautsprechereinrichtung zur Ausgabe akustischer Signale bestimmter Intensität (Lautstärke), Frequenz und Rhythmik und/oder eine im einfachsten Falle als Leuchtdiode ausgebildete Anzeigeeinrichtung 9 (vgl. Fig. 5, 6) zur Ausgabe optischer Signale bestimmter graphischer Darstellung, Frequenz und Rhythmik und/oder eine Vibrationseinrichtung zur Ausgabe haptischer Signale bestimmter Intensität, Frequenz und Rhythmik ausgebildet sein bzw. wenigstens eine solche umfassen. Bei Ausgabe entsprechender Ladezustands- und/oder Ladebetriebsinformationen an ein benutzerseitiges (mobiles) Endgerät ist die Ausgabeeinrichtung 8 dazu eingerichtet, entsprechende Ladezustands- und/oder Ladebetriebsinformationen direkt oder indirekt, d. h. z. B. über ein Kommunikationsnetzwerk, an ein benutzerseitiges (mobiles) Endgerät zu senden.

Fig. 2 zeigt eine Prinzipdarstellung eine Ladevorrichtung 6 zum Laden eines Energiespeichers 3 einer wie in Fig. 1 gezeigten Sehhilfe-Vorrichtung 1. Die Ladevorrichtung 6 umfasst wenigstens ein induktives Element 5, d. h. eine induktive Spule (Sender- oder Primärspule), welches dazu eingerichtet ist, mit dem dem zu ladenden Energiespeicher 3 der Sehhilfe-Vorrichtung 1 zugeordneten induktiven Element 4 (Empfänger- oder Sekundärspule) induktiv zu wechselwirken, um den Energiespeicher 3 über induktive Wechselwirkung drahtlos mit elektrischer Energie zu versorgen bzw. zu laden.

Die Ladevorrichtung 6 umfasst einen Gehäusekörper 10. Der in Fig. 2 plattenartig bzw. - förmig ausgebildete Grundkörper 10 weist einen ebenen Auflageabschnitt 11 zur Auflage des Gehäusekörpers 10 auf einem, insbesondere ebenen, Untergrund, d. h. z. B. auf einer Möbelplatte, insbesondere einer Tischplatte, auf. Der Auflageabschnitt 11 ist durch die einem jeweiligen Untergrund zugewandte Unterseite des Gehäusekörpers 10 gebildet und ermöglicht eine sichere Aufstellung der Ladevorrichtung 6 auf einem Untergrund. Der Gehäusekörper 10 weist ferner einen Aufnahmeabschnitt 12 zur zumindest abschnittsweisen Aufnahme der Sehhilfe-Vorrichtung 1 zumindest während eines Ladevorgangs des jener zugehörigen Energiespeichers 3 auf. Der Aufnahmeabschnitt 12 ist bei dem in Fig. 2 gezeigten Ausführungsbeispiel durch die einem jeweiligen Untergrund abgewandte Oberseite des Gehäusekörpers 10 gebildet und somit ebenfalls eben.

Bei dem in Fig. 3 gezeigten Ausführungsbeispiel ist der Auflageabschnitt 11 - analog dem in Fig. 2 gezeigten Ausführungsbeispiel - ebenso durch die einem jeweiligen Untergrund zugewandte Unterseite des Gehäusekörpers 10 gebildet und ermöglicht eine sichere Aufstellung der Ladevorrichtung 6 auf einem Untergrund. Der Aufnahmeabschnitt 12 ist hingegen durch eine der Außenkontur eines Grundkörpers 14 der Sehhilfe-Vorrichtung 1, insbesondere eines im Zusammenhang mit den in den Fig. 5, 6 gezeigten Ausführungsbeispielen beschriebenen Handhabungsabschnitts 15 des Grundkörpers 14, der Sehhilfe-Vorrichtung 1 gegengleich geformte Aufnahmekontur 13 in Form einer, insbesondere muldenartigen, Vertiefung gebildet und ermöglicht eine besonders sichere und kompakte Lagerung der Sehhilfe-Vorrichtung 1 an bzw. in dem Gehäusekörper 10.

Die Ladevorrichtung 6 kann eine Steuereinrichtung (nicht gezeigt), welche zur Steuerung des Ladebetriebs des Energiespeichers 3 und zur Ermittlung einer den Ladebetrieb des Energiespeichers 3 beschreibenden Ladebetriebsinformation eingerichtet ist, umfassen. Analog der vorrichtungsseitigen Steuereinrichtung 7 kann auch der ladevorrichtungsseitigen Steuereinrichtung eine Ausgabeeinrichtung 16, z. B. in Form einer Anzeigeeinrichtung, zugeordnet sein, welche zur, z. B. zur optischen, Ausgabe wenigstens einer von der Steuereinrichtung ermittelten Ladebetriebsinformation an einen Benutzer und/oder an ein benutzerseitiges (mobiles) Endgerät eingerichtet ist.

Die Ladevorrichtung 6 ist mit einem elektrischen Anschlusselement 16, z. B. in Form einer Anschluss- bzw. Steckerbuchse, zum Anschluss eines elektrischen Versorgungskabels zur Verbindung der Ladevorrichtung 6 mit einer externen elektrischen Energiequelle (Stromquelle) ausgestattet. Das elektrische Anschlusselement 16 ist an einem gut zu erreichenden freiliegenden Abschnitt des Gehäusekörpers 10 angeordnet oder ausgebildet.

Fig. 4 zeigt eine Prinzipdarstellung einer Ladeanordnung zum Laden eines Energiespeichers 3 einer wie in Fig. 1 gezeigten Sehhilfe-Vorrichtung 1 vermittels einer wie in den Fig. 2, 3 gezeigten Ladevorrichtung 6. Die Sehhilfe-Vorrichtung 1 ist im Rahmen eines Ladevorgangs derart auf der Ladevorrichtung 6 angeordnet, d. h. auf diese auf- bzw. in diese eingelegt, dass eine induktive Wechselwirkung zwischen dem vorrichtungsseitigen induktiven Element 4 und dem ladevorrichtungsseitigen induktiven Element 5 möglich ist.

Mit der in Fig. 4 gezeigten Ladeanordnung lässt sich ein Verfahren zum Laden eines Energiespeichers 3 einer Sehhilfe-Vorrichtung 1. Verfahrensgemäß wird der zu ladende Energiespeicher 3 im Rahmen eines Ladevorgangs über induktive Wechselwirkung des vorrichtungsseitigen induktiven Elements 4 mit einem weiteren induktiven Element 5 mit elektrischer Energie versorgt und somit geladen.

Fig. 5 zeigt eine perspektivische Darstellung einer Sehhilfe-Vorrichtung 1 gemäß einem konkreten Ausführungsbeispiel, Fig. 6 zeigt einen Längsschnitt durch die in Fig. 5 gezeigte Sehhilfe-Vorrichtung 1. Grundsätzlich gelten die Ausführungen im Zusammenhang mit dem in Fig. 1 in einer Prinzipdarstellung gezeigten Sehhilfe-Vorrichtung 1 analog für das in den Fig. 5, 6 gezeigte Ausführungsbeispiel bzw. lassen sich die die Ausführungen im Zusammenhang mit dem in Fig. 1 in einer Prinzipdarstellung gezeigten Sehhilfe-Vorrichtung 1 auf das in den Fig. 5, 6 gezeigte Ausführungsbeispiel übertragen.

Anhand der Fig. 5, 6 ist ein länglicher Grundkörper 14 der Sehhilfe-Vorrichtung 1 ersichtlich. Der Grundkörper 14 ist zumindest funktionell in einen Lagerungsabschnitt 18 zur Lagerung eines optischen Elements 19, d. h. eines Linsen- oder Lupenglases, und einen Handhabungsabschnitt 20 zur Handhabung des Grundkörpers 14 aufgeteilt. Der Handhabungsabschnitt 20 weist eine ergonomische, d. h. z. B. bauchige, geometrische Gestalt auf, was die Handhabbarkeit der Sehhilfe-Vorrichtung 1 weiter verbessert.

Anhang von Fig. 6 ist ersichtlich, dass das induktive Element 4 im Bereich des Handhabungsabschnitts 20 in dem Grundkörper 14 angeordnet ist. Gleiches gilt für den Energiespeicher 3, die Steuereinrichtung 7 und die Funktionskomponente 2, bei welcher es sich um ein Leuchtmittel, d. h. eine Leuchtdiode (LED), welches in wenigstens einem Betriebszustand Licht bestimmter optischer Eigenschaften, d. h. insbesondere einer bestimmten Intensität und einer bestimmten Wellenlänge, emittiert, handelt.

Das Leuchtmittel ist benachbart zu dem Lagerungsabschnitt 18 im Bereich des Handhabungsabschnitts 20 angeordnet, sodass von diesem emittiertes Licht zumindest auf das durch das optische Element 19 betrachtbare bzw. betrachtete Objekt trifft. Zwischen dem Leuchtmittel und dem Lagerungsabschnitt 18 bzw. dem durch diesen gelagerten optischen Element 19, ist ein Blendenabschnitt 24 angeordnet oder ausgebildet, welcher dazu eingerichtet ist, zu verhindern, dass von dem Leuchtmittel emittiertes Licht unmittelbar auf das optische Element 19 trifft.

Der Funktionskomponente 2 ist ein relativ zu dem Grundkörper 14 an diesem wie durch den Doppelpfeil in Fig. 5 angedeutet zwischen unterschiedlichen Positionen, welchen jeweils bestimmte Betriebszustände der Funktionskomponente 2 zugeordnet sind, bewegbar gelagertes Betätigungselement 21 in Form eines Schiebers zugehörig. Das Betätigungselement 21 ist mit einem ebenso beweglich gelagerten Wandlerelement 22 einer einen Teil der Steuereinrichtung 7 bildenden, jedenfalls mit dieser kommunizierenden Wandlereinrichtung 23 bewegungsgekoppelt, überwelche entsprechende Positionierungen des Betätigungselements 21 in entsprechende zugeordnete Betriebszustände umgesetzt werden.

Konkret kann die Funktionskomponente 2 in Form des Leuchtmittels z. B. in einer ersten Position außer Betrieb genommen sein, sodass diese kein Licht emittiert, in einer zweiten Position in einen ersten Betriebszustand genommen sein, sodass diese Licht bestimmter optischer Eigenschaften, d. h. Licht einer ersten Intensität bzw. einer ersten Wellenlänge, emittiert, und in einer dritten Position in einen zweiten Betriebszustand genommen sein, sodass diese Licht bestimmter optischer Eigenschaften, d. h. Licht einer zweiten Intensität bzw. einer zweiten Wellenlänge, emittiert.

Anhand des in Fig. 6 gezeigten Längsschnitts ist ersichtlich, dass das induktive Element 4 unterhalb des Energiespeichers 3 und somit unterhalb der Längs(mittel)achse des Handhabungsabschnitts 20, insbesondere im Bereich der Innenseite einer Außenwandung des Handhabungsabschnitts 20, innerhalb des Grundkörpers 14 angeordnet ist. Diese Anordnung des induktiven Elements 4 ist zweckmäßig, als das induktive Element 4 einerseits gegenüber äußeren, d. h. z. B. mechanischen und/oder klimatischen, Einflüssen gut geschützt angeordnet ist und andererseits im Rahmen eines Ladevorgangs des Energiespeichers 3 möglichst nahe an ein keinen Bestandteil der Sehhilfe-Vorrichtung 1 bildendes weiteres induktives Element 5 gebracht werden kann, was einen hohen Wirkungsgrad der induktiven Wechselwirkung und somit des Ladevorgangs gewährleistet.

### BEZUGSZEICHENLISTE

- 1: Sehhilfe-Vorrichtung
- 2: Funktionskomponente
- 3: Energiespeicher
- 4: induktives Element
- 5: induktives Element
- 6: Ladevorrichtung
- 7: Steuereinrichtung
- 8: Ausgabeeinrichtung
- 9: Anzeigeeinrichtung
- 10: Gehäusekörper
- 11: Auflageabschnitt
- 12: Aufnahmeabschnitt
- 13: Außenkontur
- 14: Grundkörper
- 15: Handhabungsabschnitt
- 16: Ausgabeeinrichtung
- 17: elektrisches Anschlusselement
- 18: Lagerungsabschnitt
- 19: optisches Element
- 20: Handhabungsabschnitt
- 21: Betätigungselement
- 22: Wandlerelement
- 23: Wandlereinrichtung
- 24: Blendenabschnitt

## Patentansprüche

1. Optisch oder elektronisch vergrößernde Sehhilfe-Vorrichtung (1) in Form einer mobilen Lupe, insbesondere einer Handlupe, Standlupe oder Umhängelupe, umfassend:
- wenigstens eine in wenigstens einem Betriebszustand elektrische Energie verbrauchende elektrische oder elektronische Funktionskomponente (2),
- wenigstens einen der wenigstens einen elektrischen oder elektronischen Funktionskomponente (2) zugeordneten wiederaufladbaren elektrischen Energiespeicher (3),
- wenigstens ein dem wenigstens einen elektrischen Energiespeicher (3) zugeordnetes induktives Element (4), welches dazu eingerichtet ist, den wenigstens einen elektrischen Energiespeicher (3) über induktive Wechselwirkung mit wenigstens einem weiteren induktiven Element (5) mit elektrischer Energie zu versorgen,
- einen länglichen Grundkörper (14) mit wenigstens einem Lagerungsabschnitt (18) zur Lagerung wenigstens eines optischen Elements (19), insbesondere eines Linsen- oder Lupenglases, und wenigstens einem Handhabungsabschnitt (20) zur Handhabung des Grundkörpers (14), wobei das wenigstens eine induktive Element (4) im Bereich des Handhabungsabschnitts (20) an oder in dem Grundkörper (14) angeordnet oder ausgebildet ist.

2. Sehhilfe-Vorrichtung nach Anspruch 1, **dadurch gekennzeichnet, dass** das wenigstens eine induktive Element (4) unterhalb einer Längsmittelachse des Handhabungsabschnitts (20), insbesondere im Bereich der Innenseite einer Außenwandung des Handhabungsabschnitts (20), innerhalb des Grundkörpers (14) angeordnet ist.

3. Sehhilfe-Vorrichtung nach einem der vorhergehenden Ansprüche, **gekennzeichnet durch** den länglichen Grundkörper (14) mit wenigstens einem Lagerungsabschnitt (18) zur Lagerung wenigstens eines optischen Elements (19), insbesondere eines Linsen- oder Lupenglases, und wenigstens einem Handhabungsabschnitt (20) zur Handhabung des Grundkörpers (14), wobei der Handhabungsabschnitt (20) zumindest abschnittsweise eine ergonomisch, insbesondere bauchig, geformte geometrische Gestalt aufweist.

4. Sehhilfe-Vorrichtung nach einem der vorhergehenden Ansprüche, **gekennzeichnet durch** eine Steuereinrichtung (7), welche zur Steuerung des Ladezustands, insbesondere des Ladebetriebs, des wenigstens einen elektrischen Energiespeichers (3), und zur Ermittlung wenigstens einer den Ladezustand und/oder den Ladebetrieb des wenigstens einen elektrischen Energiespeichers (3) beschreibenden Ladezustands-und/oder Ladebetriebsinformation eingerichtet ist.

5. Sehhilfe-Vorrichtung nach Anspruch 4, **gekennzeichnet durch** wenigstens eine der Steuereinrichtung (7) zugeordnete Ausgabeeinrichtung (8), welche zur Ausgabe wenigstens einer von der Steuereinrichtung (7) ermittelten Ladezustands- und/oder Ladebetriebsinformation an einen Benutzer und/oder an ein benutzerseitiges Endgerät eingerichtet ist.

6. Sehhilfe-Vorrichtung nach einem der vorhergehenden Ansprüche, **dadurch gekennzeichnet, dass** die oder wenigstens eine elektrische oder elektronische Funktionskomponente (2) als ein Leuchtmittel, insbesondere als eine LED, ausgebildet ist oder wenigstens ein solches umfasst.

7. Sehhilfe-Vorrichtung nach Anspruch 6, **gekennzeichnet durch** den länglichen Grundkörper (14) mit wenigstens einem Lagerungsabschnitt (18) zur Lagerung wenigstens eines optischen Elements (19), insbesondere eines Linsen- oder Lupenglases, und wenigstens einem Handhabungsabschnitt (20) zur Handhabung des Grundkörpers (14), wobei das Leuchtmittel im Bereich des Lagerungsabschnitts (18) angeordnet ist, sodass von dem Leuchtmittel emittiertes Licht zumindest auf den durch das optische Element betrachtbaren Bereich trifft.

8. Sehhilfe-Vorrichtung nach Anspruch 7, **dadurch gekennzeichnet, dass** zwischen dem optischen Element (19) und der als Leuchtmittel ausgebildeten Funktionskomponente (2) ein Blendenabschnitt (24) angeordnet oder ausgebildet ist, welcher dazu eingerichtet ist, zu verhindern, dass von dem Leuchtmittel emittiertes Licht unmittelbar auf das optische Element (19) trifft.

9. Ladevorrichtung (6) zum Laden eines wiederaufladbaren elektrischen Energiespeichers (3) einer Sehhilfe-Vorrichtung (1) nach einem der vorhergehenden Ansprüche, **gekennzeichnet durch** wenigstens ein induktives Element (5), welches dazu eingerichtet ist, mit wenigstens einem einem zu ladenden elektrischen Energiespeicher (3) der Sehhilfe-Vorrichtung (1) zugeordneten induktiven Element (4) induktiv zu wechselwirken um den wenigstens einen elektrischen Energiespeicher (3) über induktive Wechselwirkung mit elektrischer Energie zu versorgen.

10. Ladevorrichtung nach Anspruch 9, **gekennzeichnet durch** einen Gehäusekörper (10), welcher wenigstens einen Aufnahmeabschnitt (13) zur zumindest abschnittsweisen Aufnahme der Sehhilfe-Vorrichtung (1) zumindest während eines Ladevorgangs des jener zugehörigen elektrischen Energiespeichers (3) aufweist und/oder wenigstens einen, insbesondere ebenen, Auflageabschnitt (11) zur Auflage des Gehäusekörpers (10) auf einem, insbesondere ebenen, Untergrund aufweist.

11. Ladevorrichtung nach Anspruch 10, **dadurch gekennzeichnet, dass** der Aufnahmeabschnitt (13) eine der Außenkontur eines Grundkörpers (14), insbesondere eines Handhabungsabschnitts (20) des Grundkörpers (14), der Sehhilfe-Vorrichtung (1) gegengleich geformte Aufnahmekontur (13) aufweist.

12. Ladevorrichtung nach einem der Ansprüche 9 bis 11, **gekennzeichnet durch** eine Steuereinrichtung, welche zur Steuerung des Ladebetriebs des wenigstens einen elektrischen Energiespeichers (3) und zur Ermittlung wenigstens einer den Ladebetrieb des wenigstens einen elektrischen Energiespeichers beschreibenden Ladebetriebsinformation eingerichtet ist.

13. Ladevorrichtung nach Anspruch 12, **gekennzeichnet durch** wenigstens eine der Steuereinrichtung zugeordnete Ausgabeeinrichtung (16), welche zur Ausgabe wenigstens einer von der Steuereinrichtung ermittelten Ladebetriebsinformation an einen Benutzer und/oder an ein benutzerseitiges Endgerät eingerichtet ist.

14. Ladeanordnung zum Laden eines wiederaufladbaren elektrischen Energiespeichers (3) einer Sehhilfe-Vorrichtung (1) nach einem der Ansprüche 1 bis 10 vermittels einer Ladevorrichtung (6) nach einem der Ansprüche 9 bis 13.

15. Verfahren zum Laden eines wiederaufladbaren elektrischen Energiespeichers (3) einer Sehhilfe-Vorrichtung (1) nach einem der Ansprüche 1 bis 8, **dadurch gekennzeichnet, dass** der wenigstens eine elektrische Energiespeicher (3) im Rahmen eines Ladevorgangs über induktive Wechselwirkung des wenigstens einen vorrichtungsseitigen induktiven Elements (4) mit wenigstens einem weiteren induktiven Element (5) mit elektrischer Energie versorgt wird.

## Claims

1. Optically or electronically magnifying visual aid apparatus (1) in the form of a mobile magnifier, in particular a hand-held magnifier, a stand magnifier or a hands-free magnifier, comprising:
- at least one electrical or electronic functional component (2) that consumes electrical energy in at least one operating state,
- at least one rechargeable electrical energy store (3) that is assigned to the at least one electrical or electronic functional component (2),
- at least one inductive element (4) that is assigned to the at least one electrical energy store (3) and configured to supply the at least one electrical energy store (3) with electrical energy by way of an inductive interaction with at least one further inductive element (5),
- an elongate main body (14) with at least one mounting portion (18) for mounting at least one optical element (19), in particular a lens or a magnifying glass, and at least one handling portion (20) for handling the main body (14), wherein the at least one inductive element (4) is arranged or formed at or in the main body (14) in the region of the handling portion (20).

2. Visual aid apparatus according to claim 1, **characterized in that** the at least one inductive element (4) is arranged within the main body (14) below a longitudinal central axis of the handling portion (20), in particular in the region of the inner side of an outer wall of the handling portion (20).

3. Visual aid apparatus according to any one of the preceding claims, **characterized by** the elongate main body (14) with at least one mounting portion (18) for mounting at least one optical element (19), in particular a lens or a magnifying glass, and at least one handling portion (20) for handling the main body (14), wherein the handling portion (20) has, at least in portions, an ergonomically formed, in particular bulbous, geometric form.

4. Visual aid apparatus according to any one of the preceding claims, **characterized by** a control device (7) that is configured to control the charge state, in particular the charging operation, of the at least one electrical energy store (3) and to ascertain at least one charge state and/or charging operation information item that describes the charge state and/or the charging operation of the at least one electrical energy store (3).

5. Visual aid apparatus according to claim 4, **characterized by** at least one output device (8) that is assigned to the control device (7) and configured to output at least one charge state and/or charging operation information item, ascertained by the control device (7), to a user and/or to a user-side terminal.

6. Visual aid apparatus according to any one of the preceding claims, **characterized in that** the electrical or electronic functional component (2), or at least one electrical or electronic functional component, is formed as an illuminant, in particular as an LED, or at least comprises the latter.

7. Visual aid apparatus according to claim 6, **characterized by** the elongate main body (14) with at least one mounting portion (18) for mounting at least one optical element (19), in particular a lens or a magnifying glass, and at least one handling portion (20) for handling the main body (14), wherein the illuminant is arranged in the region of the mounting portion (18) such that light emitted by the illuminant strikes at least the region observed through the optical element.

8. Visual aid apparatus according to claim 7, **characterized in that** an aperture portion (24) is arranged or formed between the optical element (19) and the functional component (2) configured as an illuminant, said aperture portion being configured to prevent light emitted by the illuminant directly encountering the optical element (19).

9. Charger apparatus (6) for charging a rechargeable electrical energy store (3) of a visual aid apparatus (1) according to any one of the preceding claims, **characterized by**
at least one inductive element (5) that is configured to inductively interact with at least one inductive element (4) assigned to an electrical energy store (3), to be charged, of the visual aid apparatus (1) in order to supply the at least one electrical energy store (3) with electrical energy by way of inductive interaction.

10. Charger apparatus according to claim 9, **characterized by** a housing body (10) which comprises at least one receiving portion (13) for receiving, at least in portions and at least during a charging process of the respectively assigned electrical energy store (3), the visual aid apparatus (1) and/or comprises at least one bearing portion (11), in particular at least one flat bearing portion, for bearing the housing body (10) on a base, in particular a flat base.

11. Charger apparatus according to claim 10, **characterized in that** the receiving portion (13) comprises a receiving contour (13) that has an inverted shape to the outer contour of a main body (14), in particular a handling portion (20) of the main body (14), of the visual aid apparatus (1).

12. Charger apparatus according to any one of claims 9 to 11, **characterized by** a control device that is configured to control the charging operation of the at least one electrical energy store (3) and ascertain at least one charging operation information item that describes the charging operation of the at least one electrical energy store.

13. Charger apparatus according to claim 12, **characterized by** at least one output device (16) that is assigned to the control device and configured to output at least one charging operation information item, ascertained by the control device, to a user and/or to a user-side terminal.

14. Charging arrangement for charging a rechargeable electrical energy store (3) of a visual aid apparatus (1) according to any one of claims 1 to 10 by means of a charger apparatus (6) according to any one of claims 9 to 13.

15. Method for charging a rechargeable electrical energy store (3) of a visual aid apparatus (1) according to any one of claims 1 to 8, **characterized in that** the at least one electrical energy store (3) is supplied with electrical energy within the scope of a charging process by way of an inductive interaction between the at least one apparatus-side inductive element (4) and at least one further inductive element (5).

## Revendications

1. Dispositif d'aide visuelle (1) à grossissement optique ou électronique, sous la forme d'une loupe mobile, en particulier d'une loupe à main, loupe à poser ou loupe à suspendre, comprenant :
- au moins un composant fonctionnel (2) électrique ou électronique consommant de l'énergie électrique dans au moins un état de fonctionnement,
- au moins un accumulateur d'énergie électrique (3) rechargeable associé à l'au moins un composant fonctionnel (2) électrique ou électronique,
- au moins un élément inductif (4) associé à l'au moins un accumulateur d'énergie électrique (3), qui est conçu pour alimenter en énergie électrique l'au moins un accumulateur d'énergie électrique (3) par interaction inductive avec au moins un autre élément inductif (5),
- un corps de base (14) allongé doté d'au moins une partie support (18) pour le support d'au moins un élément optique (19), en particulier d'un verre de lentille ou de loupe, et d'au moins une partie de manipulation (20) pour la manipulation du corps de base (14), l'au moins un élément inductif (4) étant disposé ou réalisé sur ou dans le corps de base (14) dans la zone de la partie de manipulation (20).

2. Dispositif d'aide visuelle selon la revendication 1, **caractérisé en ce que** l'au moins un élément inductif (4) est disposé à l'intérieur du corps de base (14) au-dessous d'un axe longitudinal médian de la partie de manipulation (20), en particulier dans la zone du côté intérieur d'une paroi extérieure de la partie de manipulation (20).

3. Dispositif d'aide visuelle selon l'une des revendications précédentes, **caractérisé par** le corps de base (14) allongé doté d'au moins une partie support (18) pour le support d'au moins un élément optique (19), en particulier d'un verre de lentille ou de loupe, et d'au moins une partie de manipulation (20) pour la manipulation du corps de base (14), la partie de manipulation (20) présentant, au moins sur certaines parties, une forme géométrique ergonomique, en particulier bombée.

4. Dispositif d'aide visuelle selon l'une des revendications précédentes, **caractérisé par** un moyen de commande (7), qui est conçu pour commander l'état de charge, en particulier le régime de charge, de l'au moins un accumulateur d'énergie électrique (3), et pour déterminer au moins une information d'état de charge et/ou de régime de charge décrivant l'état de charge et/ou le régime de charge de l'au moins un accumulateur d'énergie électrique (3).

5. Dispositif d'aide visuelle selon la revendication 4, **caractérisé par** au moins un moyen de sortie (8) associé au moyen de commande (7), qui est conçu pour fournir au moins une information d'état de charge et/ou de régime de charge déterminée par le moyen de commande (7) à un utilisateur et/ou à un terminal d'un utilisateur.

6. Dispositif d'aide visuelle selon l'une des revendications précédentes, **caractérisé en ce que** le ou au moins un composant fonctionnel (2) électrique ou électronique est réalisé sous la forme d'un moyen d'éclairage, en particulier d'une DEL, ou en comprend au moins un.

7. Dispositif d'aide visuelle selon la revendication 6, **caractérisé par** le corps de base (14) allongé doté d'au moins une partie support (18) pour le support d'au moins un élément optique (19), en particulier d'un verre de lentille ou de loupe, et d'au moins une partie de manipulation (20) pour la manipulation du corps de base (14), le moyen d'éclairage étant disposé dans la zone de la partie support (18), de telle sorte que de la lumière émise par le moyen d'éclairage tombe au moins sur la zone observable à travers l'élément optique.

8. Dispositif d'aide visuelle selon la revendication 7, **caractérisé en ce que,** entre l'élément optique (19) et le composant fonctionnel (2) réalisé sous la forme d'un moyen d'éclairage, est disposée ou réalisée une partie formant écran (24), qui est conçue pour empêcher que de la lumière émise par le moyen d'éclairage tombe directement sur l'élément optique (19).

9. Dispositif de charge (6) destiné à charger un accumulateur d'énergie électrique (3) rechargeable d'un dispositif d'aide visuelle (1) selon l'une des revendications précédentes, **caractérisé par**
au moins un élément inductif (5), qui est conçu pour interagir de manière inductive avec au moins un élément inductif (4) associé à un accumulateur d'énergie électrique (3) à charger du dispositif d'aide visuelle (1) pour alimenter en énergie électrique l'au moins un accumulateur d'énergie électrique (3) par interaction inductive.

10. Dispositif de charge selon la revendication 9, **caractérisé par** un corps de boîtier (10), qui comporte au moins une partie de réception (13) pour recevoir, au moins sur certaines parties, le dispositif d'aide visuelle (1) au moins pendant un processus de charge de l'accumulateur d'énergie électrique (3) associé à celui-ci et/ou comporte au moins une partie d'appui (11), en particulier plane, pour l'appui du corps de boîtier (10) sur une surface, en particulier plane.

11. Dispositif de charge selon la revendication 10, **caractérisé en ce que** la partie de réception (13) présente un contour de réception (13) formé de manière complémentaire au contour extérieur d'un corps de base (14), en particulier d'une partie de manipulation (20) du corps de base (14), du dispositif d'aide visuelle (1).

12. Dispositif de charge selon l'une des revendications 9 à 11, **caractérisé par** un moyen de commande, qui est conçu pour commander le régime de charge de l'au moins un accumulateur d'énergie électrique (3), et pour déterminer au moins une information de régime de charge décrivant le régime de charge de l'au moins un accumulateur d'énergie électrique.

13. Dispositif de charge selon la revendication 12, **caractérisé par** au moins un moyen de sortie (16) associé au moyen de commande, qui est conçu pour fournir au moins une information de régime de charge déterminée par le moyen de commande à un utilisateur et/ou à un terminal d'un utilisateur.

14. Agencement de charge pour charger un accumulateur d'énergie électrique (3) rechargeable d'un dispositif d'aide visuelle (1) selon l'une des revendications 1 à 10, au moyen d'un dispositif de charge (6) selon l'une des revendications 9 à 13.

15. Procédé destiné à la charge d'un accumulateur d'énergie électrique (3) rechargeable d'un dispositif d'aide visuelle (1) selon l'une des revendications 1 à 8, **caractérisé en ce que** l'au moins un accumulateur d'énergie électrique (3) est alimenté en énergie électrique, dans le cadre d'un processus de charge, par interaction inductive de l'au moins un élément inductif (4) côté dispositif avec au moins un autre élément inductif (5).
